# EUROPEAN PATENT APPLICATION

(11) **EP 4 541 613 A1**
(43) Date of publication of application: **23.04.2025**
(21) Application number: 24736632.1
(22) Date of filing: 20.05.2024
(51) Int. Cl.: B60H 1/00

(54) **VEHICLE AIR CONDITIONING SYSTEM REMOTE DIAGNOSIS METHOD AND SYSTEM, PLATFORM AND STORAGE MEDIUM**

(30) Priority: 05.09.2023 CN 202311141962
(71) Applicant: Xuzhou Xcmg Excavator Machinery Co., Ltd, Xuzhou, Jiangsu 221004 (CN)
(72) Inventor: XU, Liming, Xuzhou Jiangsu 221004 (CN); DONG, Yuzhong, Xuzhou Jiangsu 221004 (CN); LIU, Yueji, Xuzhou Jiangsu 221004 (CN); ZONG, Bo, Xuzhou Jiangsu 221004 (CN); MA, Xin, Xuzhou Jiangsu 221004 (CN); XU, Peng, Xuzhou Jiangsu 221004 (CN); WANG, Yu, Xuzhou Jiangsu 221004 (CN); TANG, Zhonglian, Xuzhou Jiangsu 221004 (CN)
(74) Representative: Andrejewski - Honke Patent- und Rechtsanwälte Partnerschaft mbB
(86) International application number: PCT/CN2024/094147
(87) International publication number: WO 2025/050702

(57) **Abstract**

This disclosure provides a remote diagnosis method, system, platform, and storage medium for an air conditioning system on a vehicle, which relates to the field of engineering machinery. The method includes: obtaining setting information, operating data, and environmental data of the air conditioning system via an on-vehicle terminal; and determining whether the air conditioning system is abnormal based on one or more of the setting information, the operating data, and the environmental data, in a case where a return air temperature does not meet a preset condition within a preset operating time length.

## Description

### CROSS-REFERENCE TO RELATED APPLICATIONS

The present disclosure is based on and claims priority of CN Patent Application No. 202311141962.4 filed on Sep. 05, 2023, the disclosure of which is hereby incorporated by reference in its entirety.

### TECHNICAL FIELD

This disclosure relates to the field of construction machinery, in particular to a remote diagnosis method, system, platform, and storage medium for an air conditioning system on a vehicle.

### BACKGROUND

As excavator operators get younger, their demands for comfort in the cab are increasing, as are their expectations for the reliability of the components in the cab. When operating an excavator, the operator spends most of his time in the cab, so the comfort of the air conditioning system directly determines the comfort of the entire cab system.

If the cooling or heating performance of the excavator air conditioning system does not meet the requirement of the operator, the operator must contact the local service personnel for repair. After receiving the repair, the service personnel will arrive at the site within a specified time with a pressure gauge, refrigerant, and other maintenance and testing tools to check whether the air volume, temperature and circulation mode of the air conditioner set by the user have abnormities, detect the high and low pressure of the system with the pressure gauge, touch the refrigerant pipe to feel the temperature on the spot, check whether the condenser is dirty or jammed, and then determine a possible fault of the air conditioning system based on the above situations.

### SUMMARY

According to an aspect of the present disclosure, there is provided a remote diagnosis method for an air conditioning system on a vehicle, comprising: obtaining setting information, operating data, and environmental data of the air conditioning system via an on-vehicle terminal; and determining whether the air conditioning system is abnormal based on one or more of the setting information, the operating data, and the environmental data, in a case where a return air temperature does not meet a preset condition within a preset operating time length.

In some embodiments, obtaining user repair information; determining a setting abnormity type for the air conditioning system based on the setting information; and outputting a warning or prompt message, in a case where the user repair information matches the setting abnormity type of the air conditioning system.

In some embodiments, the setting information comprises at least one of an air volume level or a preset temperature, and determining whether the air conditioning system is abnormal comprises: in a case where an air volume does not meet a corresponding requirement based on the air volume level or an indoor temperature does not meet a corresponding requirement based on the preset temperature, determining that the air conditioning system is not set abnormally in response to not receiving any user repair information, and determining that the air conditioning system is set abnormally in response to receiving the user repair information.

In some embodiments, the setting information further comprises a circulation mode, and determining whether the air conditioning system is abnormal further comprises: in a case where the circulation mode is an external circulation mode, determining that the air conditioning system is not set abnormally in response to not receiving any user repair information, and determining that the air conditioning system is set abnormally in response to receiving the user repair information.

In some embodiments, the setting information comprises an operating mode, in a case where the operating mode is a cooling mode, the operating data comprises at least one of a refrigerant pressure, a condenser wind speed, a condenser air pressure, a refrigerant subcooling, or a refrigerant superheat, and determining whether the air conditioning system is abnormal comprises: determining that the air conditioning system is faulty, in a case where at least one of the condenser air pressure, the condenser wind speed, the refrigerant pressure, the refrigerant subcooling, or the refrigerant superheat does not meet a corresponding requirement.

In some embodiments, the setting information comprises an operating mode, in a case where the operating mode is a heating mode, the environmental data comprises a water temperature, and determining whether the air conditioning system is abnormal comprises: determining that the air conditioning system is faulty, in a case where the water temperature does not meet a corresponding requirement.

In some embodiments, the environmental data comprises an ambient temperature and a return air temperature, and the setting information comprises an operating time length, and in a case where the ambient temperature is in a preset temperature range, determining whether the air conditioning system is abnormal based on the setting information, the operating data, and the environmental data in response to the return air temperature of the air conditioning system not meeting a preset condition within a preset operating time length.

In some embodiments, sending a warning or prompt message to at least one of an on-vehicle instrument, a customer service terminal, or a user terminal upon determination of a setting abnormity or fault in the air conditioning system.

In some embodiments, sending one or more of the setting information, the operating data, and the environmental data to a display device for display.

According to another aspect of the present invention, there is further provided an Internet of Things (IoT) platform, comprising: an information acquisition module configured to obtain setting information, operating data, and environmental data of the air conditioning system via an on-vehicle terminal; and a fault determination module configured to determine whether the air conditioning system is abnormal based on one or more of the setting information, the operating data, and the environmental data, in a case where a return air temperature does not meet a preset condition within a preset operating time length.

According to another aspect of the present invention, there is further provided an Internet of Things (IoT) platform, comprising: a memory; and a processor coupled to the memory, the processor configured to perform the remote diagnosis method for an air conditioning system on a vehicle described above based on instructions stored in the memory.

According to an aspect of the present disclosure, there is provided a remote diagnosis system for an air conditioning system on a vehicle, comprising: the IoT platform described above; an air conditioning system; and an on-vehicle terminal configured to obtain and send to the IoT platform one or more of setting information, operating data, and environmental data of the air conditioning system.

In some embodiments, the remote diagnosis system for an air conditioning system on a vehicle further comprises: an on-vehicle instrument configured to obtain and send to the on-vehicle terminal one or more of the setting information, the operating data, and the environmental data of the air conditioning system, to make the on-vehicle terminal send one or more of the setting information, the operating data, and the environmental data of the air conditioning system to the IoT platform and receive a warning or prompt message sent from the IoT platform.

In some embodiments, the remote diagnosis system for an air conditioning system on a vehicle further comprises at least one of a water temperature sensor, a wind speed sensor, a wind pressure sensor, a refrigerant temperature sensor, a pressure sensor, or a display terminal, wherein: the water temperature sensor is configured to detect water temperature; the wind speed sensor is configured to detect wind speed of a condenser; the wind pressure sensor is configured to detect an inlet-to-outlet pressure difference of a condenser; the refrigerant temperature sensor is configured to detect refrigerant temperature in a refrigerant pipe; the pressure sensor is configured to detect refrigerant pressure in a refrigerant pipe; and the display terminal is configured to display one or more of the settings information, the operational data, and the environmental data.

According to a further aspect of the present disclosure, there is further provided a computer readable storage medium having stored thereon computer program instructions that, when executed by a processor, implement the remote diagnosis method for an air conditioning system on a vehicle described above.

According to another aspect of the present disclosure, there is further provided a computer program, comprising: instructions that, when executed by a processor, cause the processor to perform the remote diagnosis method for an air conditioning system on a vehicle described above.

Other features and advantages of the present invention will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a flowchart of a remote diagnosis method for an air conditioning system on a vehicle according to some embodiments of the present disclosure;
FIG. 2 is a flowchart of a remote diagnosis method for an air conditioning system on a vehicle according to other embodiments of the present disclosure;
FIG. 3 is a flowchart of a remote diagnosis method for an air conditioning system on a vehicle according to still other embodiments of the present disclosure;
FIG. 4 is a flowchart of a remote diagnosis method for an air conditioning system on a vehicle according to further embodiments of the present disclosure;
FIG. 5 is a schematic structure diagram of an IoT platform according to some embodiments of the present disclosure;
FIG. 6 is a schematic structure diagram of an IoT platform according to other embodiments of the present disclosure;
FIG. 7 is a schematic structure diagram of an IoT platform according to still other embodiments of the present disclosure;
FIG. 8 is a schematic structure diagram of a remote diagnosis system for an air conditioning system on a vehicle according to some embodiments of the present disclosure; and
FIG. 9 is a schematic structure diagram of a remote diagnosis system for an air conditioning system on a vehicle according to other embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as a limitation to the invention, its application or use.

Techniques, methods, and device known to those of ordinary skill in the relevant art may not be discussed in detail, but where appropriate, these techniques, methods, and devices should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

For a clear understanding of the object of the present disclosure, its technical solution and advantages, the present disclosure will be further described in detail below in conjunction with the accompanying drawings and embodiments.

In related technologies, the procedure from receiving a user's repair to determining the cause of an air conditioner failure, including contacting available service personnel, preparing tools after receiving an instruction, traveling to the site, and re-examining due to insufficient experience, may waste a lot of time and human resources, resulting in delays in air conditioner services and poor accuracy of fault diagnosis. This disclosure provides a remote diagnosis method, system, platform, and storage medium for an air conditioning system on a vehicle that can improve the service effectiveness and timeliness. The technical solution of the present disclosure will be introduced below with reference to specific embodiments.

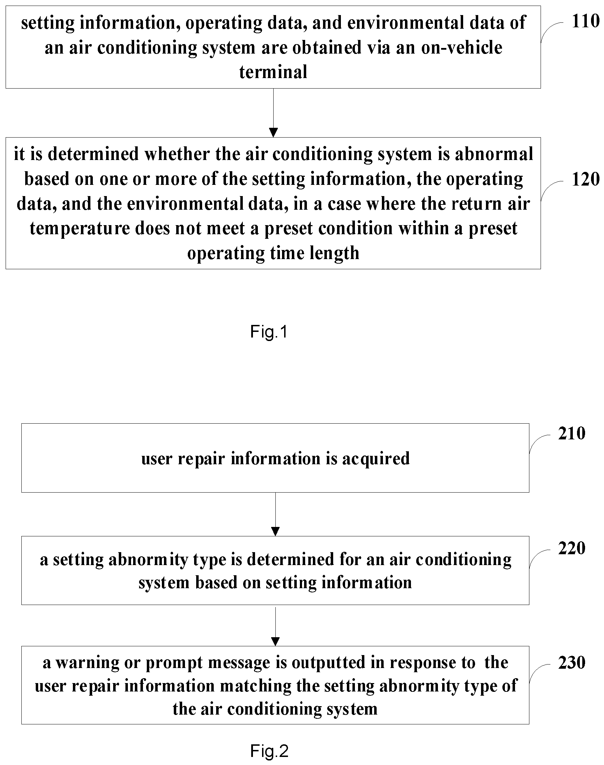

FIG. 1 is a flowchart of a remote diagnosis method for an air conditioning system on a vehicle according to some embodiments of the present disclosure. This method can be performed on an IoT platform and comprises steps 110 to 120.

In step 110, setting information, operating data, and environmental data of an air conditioning system are obtained via an on-vehicle terminal.

In some embodiments, a controller area network (CAN) communication module is provided in an air conditioning system that sends setting information, operating data, and environmental data of the air conditioning system to on-vehicle instruments. On-vehicle instruments send the setting information, the operating data and the environmental data to an on-vehicle terminal that can directly acquire water temperature data from a water temperature sensor and a condenser wind speed from a wind speed sensor. Therefore, data such as the directly acquired water temperature data and the condenser wind speed, as well as the data sent from the on-vehicle instruments, can be sent to an IoT platform.

In some embodiments, the setting information comprises man-made settings, such as a power-on time, an operating time length, an operating mode, a circulation mode, a set temperature, and an air volume level, etc. The operating data comprises air conditioning operating data, such as a condenser wind speed, a refrigerant pressure, a condenser air pressure, a refrigerant subcooling, and a refrigerant superheat, etc. The environmental data comprises external environmental data, such as an ambient temperature, a return air temperature, and a water temperature, etc.

Various data information of the air conditioning system is automatically uploaded to an IoT display platform, which can comprehensively grasp various data of the air conditioning system. There is no need for technical personnel to be on-site to have real-time insight into the operation of each air conditioner, significantly reducing service time and saving manpower and resources.

In some embodiments, the vehicle is an industrial vehicle, such as an excavator.

In step 120, it is determined whether the air conditioning system is abnormal based on one or more of the setting information, the operating data, and the environmental data, in a case where the return air temperature does not meet a preset condition within a preset operating time length.

In some embodiments, the IoT platform may also import user repair information. The IoT platform determines whether the air conditioning system is set abnormally or is faulty, based on the user repair information, the setting information, the operating data, and the environmental data. For example, all the data is processed on the IoT platform to make a logical decision. Based on the abnormity data in combination with the user's repair information, it is automatically determined whether to send a warning or prompt message to a vehicle instrument, a customer service terminal, or a user's mobile terminal.

In the above embodiment, the IoT platform obtains various data of the air conditioning system in real time, and makes a decision on the abnormal situation of the air conditioning system in a timely manner based on the obtained data in a case where the return air temperature does not meet the preset condition, which improves the service effectiveness and timeliness.

FIG. 2 is a flowchart of a remote diagnosis method for an air conditioning system on a vehicle according to other embodiments of the present disclosure. This embodiment comprises steps 210 to 230.

In step 210, user repair information is acquired.

In some embodiments, the user repair information can be imported on an IoT platform.

In step 220, a setting abnormity type is determined for an air conditioning system based on setting information.

For example, an air volume level setting abnormity can be identified based on an air volume; an incorrect temperature setting can be identified based on an indoor temperature; and an external circulation mode abnormity can be determined based on a circulation mode.

In step 230, a warning or prompt message is outputted in response to the user repair information matching the setting abnormity type of the air conditioning system.

For example, a warning or prompt message is sent to an on-vehicle instrument, a customer service terminal, or a user terminal to, for example, prompt the user or service personnel to adjust the settings or to maintain related components.

In the above embodiment, user repair information related to the air conditioning system is matched with the setting abnormity type identified by the platform, which can improve the accuracy and timeliness of abnormality determination. For personnel who are not familiar with the operation of indoor air conditioning systems, the IoT platform can send a prompt or warning message in time to instruct the user to reset the air conditioning parameters.

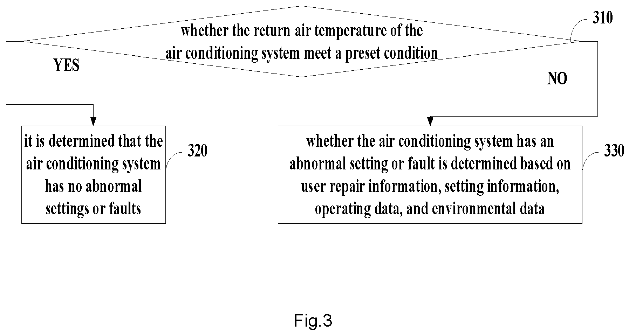

FIG. 3 is a flowchart of a remote diagnosis method for an air conditioning system on a vehicle according to still other embodiments of the present disclosure. This embodiment comprises steps 310 to 330.

In step 310, it is determined whether the return air temperature of the air conditioning system meet a preset condition within a preset operating time length, in a case where the ambient temperature is within a preset range. If so, the method proceeds to step 320; otherwise, the method proceeds to step 330.

In some embodiments, an air conditioner has a cooling mode and a heating mode. In the cooling mode, if the ambient temperature is between T1 °C and T2 °C, and if the return air temperature is less than or equal to N1 °C within a preset operating time length, it indicates that the return air temperature meets the preset condition. In the heating mode, if the ambient temperature is between T3 °C and T4 °C, and if the return air temperature is greater than or equal to N2 °C within a preset operating time length, it indicates that the return air temperature meets the preset condition.

N1 °C and N2 °C can be user-set temperatures.

In step 320, it is determined that the air conditioning system has no abnormal settings or faults.

In step 330, whether the air conditioning system has an abnormal setting or fault is determined based on user repair information, setting information, operating data, and environmental data.

In the above embodiment, various data information of the air conditioning system is automatically uploaded to an IoT platform, and user repair information related to the air conditioning system is uploaded to the IoT platform to match the detected air conditioning data, thereby improving the accuracy of fault diagnosis and the timeliness of service.

In some embodiments of the present disclosure, in the case where an air volume does not meet a corresponding requirement based on the air volume level or an indoor temperature does not meet a corresponding requirement based on the preset temperature, it is confirmed that the air conditioning system is not set abnormally in response to not receiving any user repair information, and it is confirmed that the air conditioning system is set abnormally in response to receiving the user repair information.

For example, after an air volume level is set by a user, if the user's air volume requirement can be met, it indicates that the air volume level of the air conditioning system is set normally; if the air volume requirement cannot be met but there is no user report for service, it indicates that the air volume or temperature is within the user's acceptance range and there is no need to adjust the air volume level and output a warning or prompt message; if the air volume requirement cannot be met and there is a user report for service, it indicates that the air volume level of the air conditioning system may be set abnormally.

For another example, after a temperature is set by a user, if the detected indoor temperature meet a corresponding requirement, it indicates that the air conditioning system has a normal temperature setting; if the temperature requirement cannot be met but there is no user report for service, it indicates that the indoor temperature is within the user's acceptance range and there is no need to adjust the set temperature. In this case, the air conditioning system is not faulty and there is no need to output a warning or prompt message; if the temperature requirement cannot be met and there is a user report for service, it indicates that the temperature setting of the air conditioning system is abnormal.

In some embodiments of the present disclosure, in a case where the circulation mode is an external circulation mode, it is confirmed that the air conditioning system is not set abnormally in response to not receiving any user repair information, and it is confirmed that the air conditioning system is set abnormally in response to receiving the user repair information.

For example, after a circulation mode is set by a user, if the circulation mode is an internal circulation mode, it indicates that the circulation mode is not set abnormally; if the circulation mode is an external circulation mode, but there is no user report for service, it also indicates that the circulation mode is set abnormally, that is, the user accepts the existing circulation mode by default and there is no need to output a warning or prompt message; if the circulation mode is an external circulation mode and there is a user report for service, it indicates that the circulation mode is set abnormally and the user is prompted in time to change the circulation mode to internal circulation mode.

In some embodiments of the present disclosure, in a case where the operating mode of the air conditioning system is a cooling mode, the operating data of the air conditioning system comprises a refrigerant pressure, a condenser wind speed, a condenser air pressure, a refrigerant subcooling, and a refrigerant superheat, etc.

If it is determined that at least one of the condenser air pressure, the condenser wind speed, the refrigerant pressure, the refrigerant subcooling, or the refrigerant superheat does not meet a corresponding requirement, it is determined that the air conditioning system is faulty.

For example, if the condenser air pressure meets a pressure difference requirement, it indicates that the device components related to condenser air pressure are not faulty. If the condenser air pressure does not meet the pressure difference requirement, it indicates that the device components related to condenser air pressure are faulty.

For another example, if the condenser wind speed meets an air speed requirement, it indicates that the device components related to condenser wind speed are not faulty. If the condenser wind speed does not meet the air speed requirement, it indicates that the device components related to condenser wind speed are faulty.

For another example, if the refrigerant superheat or undercooling is within a preset range and the refrigerant pressure is within a nominal pressure range, it indicates that there is no problem with refrigerant; if the refrigerant superheat or undercooling exceeds the preset range, or the refrigerant pressure exceeds the nominal pressure range, it indicates that the refrigerant-related components are faulty.

In other embodiments of the present disclosure, if the operating mode is a heating mode, the environmental data comprises a water temperature. If the water temperature does not meet the requirement, it is determined that the air conditioning system is faulty.

For example, if a water temperature requirement can be met, it indicates that there is no problem with water temperature; if the water temperature requirement cannot be met, it indicates that the water temperature-related components are faulty.

In related technologies, it is only possible to diagnose cooling faults in the air conditioning system, and heating faults cannot be diagnosed. In this embodiment, the IoT platform may also obtain, in the heating mode, water temperature data information in the air conditioner to diagnose heating faults.

In some embodiments of the present disclosure, one or more of the setting information, the operating data, and the environmental data is sent from the IoT platform to a display device for display.

For example, the IoT platform visually displays an ambient temperature of a location where the machine of an air conditioning system is located and a curve of the return air temperature of each air conditioning system over time in the form of graphical curves. In addition, it displays all data information related to the air conditioning system, so that technicians can easily understand the current operating status of the air conditioning system and potential causes of failure through the displayed information.

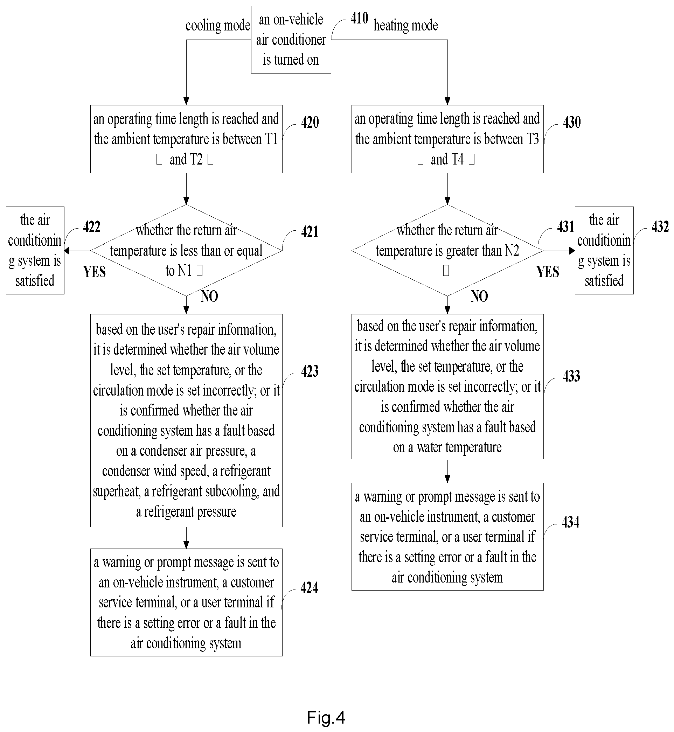

FIG. 4 is a flowchart of a remote diagnosis method for an air conditioning system on a vehicle according to further embodiments of the present disclosure. This embodiment comprises steps 410 to 434.

In step 410, an on-vehicle air conditioner is turned on. If the air conditioner is in the cooling mode, the method proceeds to step 420. If the air conditioner is in the heating mode, the method proceeds to step 430.

As long as the air conditioner is turned on, the IoT platform can obtain user-set information such as a startup time, an operating time length, an operating mode, a circulation mode, a set temperature, an air volume level, and environmental information such as an outdoor environmental temperature and an indoor return air temperature for each air conditioner. In the cooling mode, the IoT platform also obtains data information such as a refrigerant pressure, a condenser air pressure, a refrigerant subcooling, a refrigerant superheat, and a condenser wind speed of the air conditioning system. In the heating mode, in addition to data information such as a startup time, an operating time length, an ambient temperature, a return air temperature, a set temperature and an operating mode, the IoT platform may further obtain water temperature data information in the air conditioner. The IoT platform monitors more comprehensive data, which can improve the accuracy of fault diagnosis and reduce the repetition of services.

In step 420, an operating time length is reached and the ambient temperature is between T1 °C and T2 °C.

In step 421, it is determined whether the return air temperature is less than or equal to N1 °C; if so, the method proceeds to step 422; otherwise, the method proceeds to step 423.

In step 422, it is determined that the air conditioning system is satisfied and the task is completed.

In step 423, based on the user's repair information, it is determined whether the air volume level, the set temperature, or the circulation mode is set incorrectly; or it is confirmed whether the air conditioning system is faulty based on a condenser air pressure, a condenser wind speed, a refrigerant superheat, a refrigerant subcooling, and a refrigerant pressure.

In step 424, a warning or prompt message is sent to an on-vehicle instrument, a customer service terminal, or a user terminal if there is a setting error or a fault in the air conditioning system.

In step 430, an operating time length is reached and the ambient temperature is between T3 °C and T4 °C.

In step 431, it is determined whether the return air temperature is greater than N2 °C; if so, the method proceeds to step 432; otherwise, the method proceeds to step 433.

In step 432, it is determined that the air conditioning system is satisfied and the task is completed.

In step 433, based on the user's repair information, it is determined whether the air volume level, the set temperature, or the circulation mode is set incorrectly; or it is confirmed whether the air conditioning system is faulty based on a water temperature.

In step 434, a warning or prompt message is sent to an on-vehicle instrument, a customer service terminal, or a user terminal if there is a setting error or a fault in the air conditioning system.

The operating status of the air conditioning system and warning information received via an on-vehicle instrument or a mobile App can be displayed to a service technician or user.

In the above embodiment, technical personnel can have a real-time view of the operation of each air conditioner via an IoT platform without the need of having to be on-site. With more comprehensive data, the accuracy of fault diagnosis can be improved. In addition, service time can be significantly reduced, and manpower and resources can be saved.

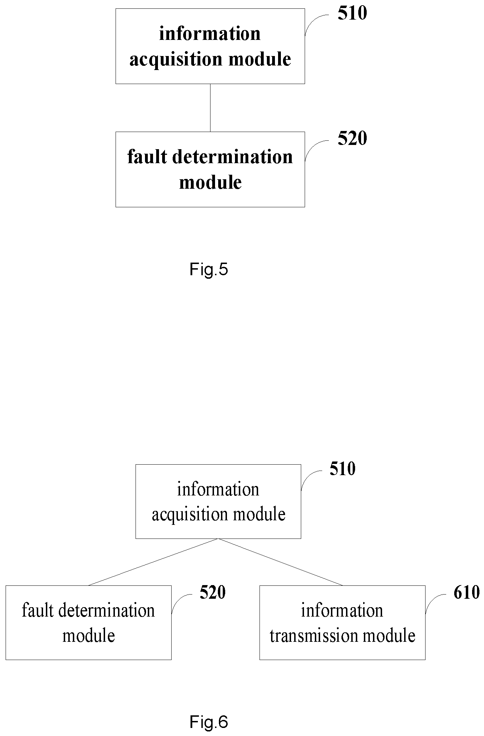

FIG. 5 is a schematic structure diagram of an IoT platform according to some embodiments of the present disclosure, which comprises an information acquisition module 510 and a fault determination module 520.

The information acquisition module 510 is configured to obtain setting information, operating data, and environmental data of the air conditioning system via an on-vehicle terminal.

In some embodiments, after an air conditioner is turned on, the IoT platform can obtain relevant data of the air conditioning system. The setting information comprises man-made settings, such as a power-on time, an operating time length, an operating mode, a circulation mode, a set temperature, and an air volume level, etc. The operating data comprises air conditioning operating data, such as a condenser wind speed, a refrigerant pressure, a condenser air pressure, a refrigerant subcooling, and a refrigerant superheat, etc. The environmental data comprises external environmental data, such as an ambient temperature, a return air temperature, and a water temperature, etc.

In some embodiments, the information acquisition module 510 is further configured to obtain user repair information.

The fault determination module 520 is configured to, if a return air temperature does not meet a preset condition within a preset operating time length, determine whether the air conditioning system is abnormal based on one or more of the setting information, the operating data, and the environmental data.

In some embodiments, the fault determination module 520 is further configured to, in a case where an ambient temperature is in a preset temperature range, determine whether the air conditioning system is abnormal based on the setting information, the operating data, and the environmental data in response to the return air temperature of the air conditioning system not meeting a preset condition within a preset operating time length.

In some embodiments, the abnormities comprise setting abnormities and fault abnormities.

In some embodiments, the fault determination module 520 is further configured to determine a setting abnormity type of the air conditioning system based on the setting information; if the user repair information matches the setting abnormity type of the air conditioning system, outputting a warning or prompt message.

In some embodiments, the fault determination module 520 is further configured to, in a case where it is determined that an air volume cannot meet a corresponding requirement based on the air volume level or an indoor temperature does not meet a corresponding requirement based on the set temperature, determine that the air conditioning system is not set abnormally in response to not receiving any user repair information, and determine that the air conditioning system is set abnormally in response to receiving the user repair information.

In some embodiments, the fault determination module 520 is further configured to, in a case where the circulation mode is an external circulation mode, determine that the air conditioning system is not set abnormally in response to not receiving any user repair information, and determine that the air conditioning system is set abnormally in response to receiving the user repair information.

In some embodiments, in the cooling mode, the fault determination module 520 is further configured to determine that the air conditioning system is faulty if it is determined that at least one of the condenser air pressure, the condenser wind speed, the refrigerant pressure, the refrigerant subcooling, or the refrigerant superheat does not meet a corresponding requirement.

In some embodiments, in the heating mode, the fault determination module 520 is further configured to determine that the air conditioning system is faulty if the water temperature does not meet the requirement.

In some embodiments of the present disclosure, as shown in FIG. 6, the remote diagnosis system for an air conditioning system on a vehicle further comprises an information transmission module 610.

The information transmission module 610 is configured to transmit a warning or prompt message to at least one of an on-vehicle instrument, a customer service terminal, or a user terminal upon confirmation of a setting abnormity or fault in the air conditioning system.

The information transmission module 610 is configured to transmit one or more of the setting information, the operating data, and the environmental data to a display device for display. Technicians can easily understand the current operating status of an air conditioning system and potential causes of failure through the displayed information.

In the above embodiment, there is no need for technicians to be on-site to gain real-time insight into the operation of each air conditioner, thereby significantly reducing service time and saving manpower and resources.

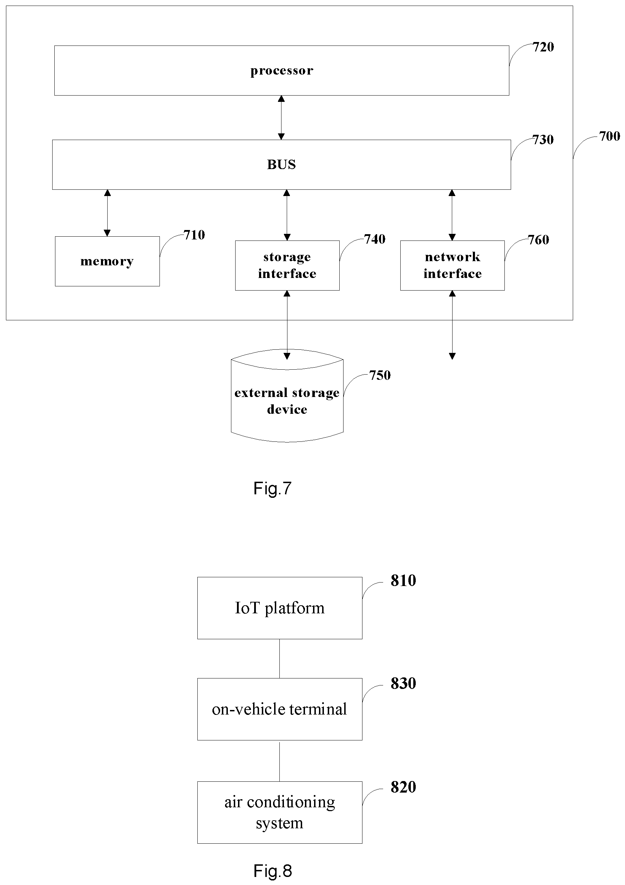

FIG. 7 is a schematic structure diagram of an IoT platform according to other embodiments of the present disclosure. As shown in FIG. 7, a IoT platform 700 comprises a memory 710 and a processor 720, wherein the memory 710 may be a magnetic disk, flash memory or any other non-volatile storage medium. The memory 710 is used to store instructions of the above embodiment. The processor 720 is coupled to the memory 710 and may be implemented as one or more integrated circuits, such as a microprocessor or microcontroller. The processor 720 is used to execute the instructions stored in the memory.

In some embodiments, the processor 720 is coupled to the memory 710 via a bus 730. The IoT platform 700 may be further connected to an external storage device 750 through a storage interface 740 to access external data, and may be further connected to a network or another computer system (not shown) through a network interface 760, which will not be described in detail herein.

In this embodiment, by storing data instructions in a memory and processing the above instructions by a processor, the accuracy of fault diagnosis and the timeliness of service can be improved.

FIG. 8 is a schematic structure diagram of a remote diagnosis system for an air conditioning system on a vehicle according to some embodiments of the present disclosure. This system comprises an IoT platform 810, an air conditioning system 820, and an on-vehicle terminal 830.

The IoT platform 810 has been described in detail in the above embodiment and will not be further explained here. The air conditioning system 820 comprises a compressor, a condenser, a dryer, an air conditioning host, an exhaust pipe, a liquid pipe, a suction pipe, and a CAN communication module. An air pressure difference between the inlet and the outlet of the condenser is detected by an air pressure sensor, a refrigerant temperature in the refrigerant pipe is detected by a refrigerant temperature sensor, a refrigerant pressure in the refrigerant pipe is detected by a pressure sensor, and a return air temperature is detected by an air temperature sensor.

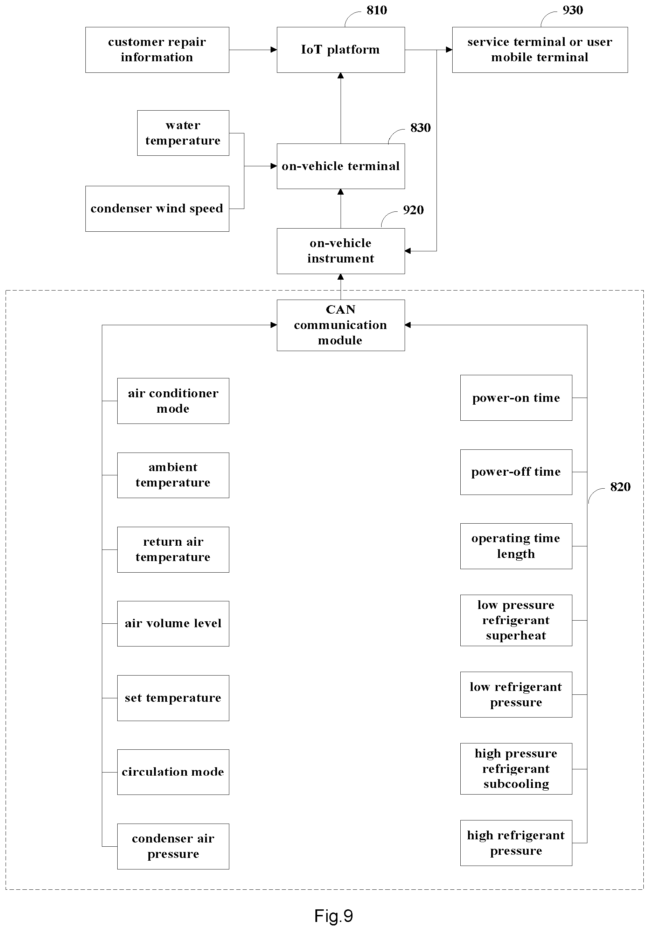

In some embodiments, as shown in FIG. 9, a CAN communication module 910 is provided in the air conditioning system to send user-set information such as a startup time, an operating time length, an operating mode, a circulation mode, a set temperature, and an air volume level of the air conditioner, environmental information such as an outdoor environmental temperature and an indoor return air temperature, and operating data such as a refrigerant pressure, a condenser air pressure, a refrigerant subcooling, and a refrigerant superheat to the on-vehicle terminal 830 via the on-vehicle instrument 920. The on-vehicle terminal 830 may directly obtain a water temperature detected by a water temperature sensor and a condenser wind speed detected by a wind speed sensor.

The on-vehicle terminal 830 sends the obtained information to an IoT platform, which will make a comprehensive decision about whether the air conditioning system has a setting abnormity or fault. The on-vehicle instrument 920 is further configured to obtain a warning or prompt message sent by the IoT platform.

In some embodiments, the system may further comprise a display terminal 930, which is a user terminal or a customer terminal configured to display one or more of the setting information, the operating data, and the environmental data.

In some embodiments, the display terminal 930 is further configured to visually display the local ambient temperature in the form of a graphical curve and the return air temperature curve of each air conditioning system over time.

In some embodiments, the on-vehicle instrument 920 is further configured to display one or more of the setting information, the operating data, and the environmental data.

In the above embodiment, the remote diagnosis system of an air conditioning system on a vehicle can achieve remote diagnosis of the air conditioning system. There is no need for technicians to be on-site to gain real-time insight into the operation of each air conditioner, thereby significantly reducing service time, saving manpower and resources, and improving the accuracy of fault diagnosis.

In other embodiments, there is provided a computer-readable storage medium stored thereon computer program instructions that, when executed by a processor, implement the steps of the method of the above embodiment. One skilled in the art should understand that, the embodiments of the present disclosure may be provided as a method, a device, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

According to some embodiments of the present disclosure, there is further provided a computer program, comprising: instructions that, when executed by a processor, cause the processor to execute the method described above.

The present disclosure is described with reference to flowcharts and/or block diagrams of methods, devices (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing device to generate a machine such that the instructions executed by a processor of a computer or other programmable data processing device to generate means implementing the functions specified in one or more flows of the flowcharts and/or one or more blocks of the block diagrams.

The computer program instructions may also be stored in a computer readable storage device capable of directing a computer or other programmable data processing device to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

Heretofore, the present disclosure has been described in detail. In order to avoid obscuring the concepts of the present disclosure, some details known in the art are not described. Based on the above description, those skilled in the art can understand how to implement the technical solutions disclosed herein.

The method and device of the present disclosure may be implemented in many ways. For example, the method and device of the present disclosure may be implemented by software, hardware, firmware, or any combination of software, hardware, and firmware. The above sequence of steps of the method is merely for the purpose of illustration, and the steps of the method of the present disclosure are not limited to the above-described specific order unless otherwise specified. In addition, in some embodiments, the present disclosure may also be implemented as programs recorded in a recording medium, which include machine-readable instructions for implementing the method according to the present disclosure. Thus, the present disclosure also covers a recording medium storing programs for executing the method according to the present disclosure.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A remote diagnosis method for an air conditioning system on a vehicle, comprising:
obtaining setting information, operating data, and environmental data of the air conditioning system via an on-vehicle terminal; and
determining whether the air conditioning system is abnormal based on one or more of the setting information, the operating data, and the environmental data, in a case where a return air temperature does not meet a preset condition within a preset operating time length.

2. The remote diagnosis method for an air conditioning system on a vehicle according to claim 1, further comprising:
obtaining user repair information;
determining a setting abnormity type for the air conditioning system based on the setting information; and
outputting a warning or prompt message, in a case where the user repair information matches the setting abnormity type of the air conditioning system.

3. The remote diagnosis method for an air conditioning system on a vehicle according to claim 1 or 2, wherein the setting information comprises at least one of an air volume level or a preset temperature, and determining whether the air conditioning system is abnormal comprises:
in a case where an air volume does not meet a corresponding requirement based on the air volume level or an indoor temperature does not meet a corresponding requirement based on the preset temperature, determining that the air conditioning system is not set abnormally in response to not receiving any user repair information, and determining that the air conditioning system is set abnormally in response to receiving the user repair information.

4. The remote diagnosis method for an air conditioning system on a vehicle according to claim 3, wherein the setting information further comprises a circulation mode, and determining whether the air conditioning system is abnormal further comprises:
in a case where the circulation mode is an external circulation mode, determining that the air conditioning system is not set abnormally in response to not receiving any user repair information, and determining that the air conditioning system is set abnormally in response to receiving the user repair information.

5. The remote diagnosis method for an air conditioning system on a vehicle according to any one of claims 1 to 4, wherein the setting information comprises an operating mode, in a case where the operating mode is a cooling mode, the operating data comprises at least one of a refrigerant pressure, a condenser wind speed, a condenser air pressure, a refrigerant subcooling, or a refrigerant superheat, and determining whether the air conditioning system is abnormal comprises:
determining that the air conditioning system is faulty, in a case where at least one of the condenser air pressure, the condenser wind speed, the refrigerant pressure, the refrigerant subcooling, or the refrigerant superheat does not meet a corresponding requirement.

6. The remote diagnosis method for an air conditioning system on a vehicle according to any one of claims 1 to 5, wherein the setting information comprises an operating mode, in a case where the operating mode is a heating mode, the environmental data comprises a water temperature, and determining whether the air conditioning system is abnormal comprises:
determining that the air conditioning system is faulty, in a case where the water temperature does not meet a corresponding requirement.

7. The remote diagnosis method for an air conditioning system on a vehicle according to any one of claims 1 to 6, wherein the environmental data comprises an ambient temperature and a return air temperature, and the setting information comprises an operating time length, and
in a case where the ambient temperature is in a preset temperature range, determining whether the air conditioning system is abnormal based on the setting information, the operating data, and the environmental data in response to the return air temperature of the air conditioning system not meeting a preset condition within a preset operating time length.

8. The remote diagnosis method for an air conditioning system on a vehicle according to any one of claims 1 to 7, further comprising:
sending a warning or prompt message to at least one of an on-vehicle instrument, a customer service terminal, or a user terminal upon determination of a setting abnormity or fault in the air conditioning system.

9. The remote diagnosis method for an air conditioning system on a vehicle according to any one of claims 1 to 8, further comprising:
sending one or more of the setting information, the operating data, and the environmental data to a display device for display.

10. An Internet of Things (IoT) platform, comprising:
an information acquisition module configured to obtain setting information, operating data, and environmental data of the air conditioning system via an on-vehicle terminal; and
a fault determination module configured to determine whether the air conditioning system is abnormal based on one or more of the setting information, the operating data, and the environmental data, in a case where a return air temperature does not meet a preset condition within a preset operating time length.

11. An Internet of Things (IoT) platform, comprising:
a memory ; and
a processor coupled to the memory, the processor configured to, based on instructions stored in the memory, carry out the remote diagnosis method for an air conditioning system on a vehicle according to any one of claims 1 to 9.

12. A remote diagnosis system for an air conditioning system on a vehicle, comprising:
an IoT platform according to claim 10 or 11;
an air conditioning system; and
an on-vehicle terminal configured to obtain and send to the IoT platform one or more of setting information, operating data, and environmental data of the air conditioning system.

13. The remote diagnosis system for an air conditioning system on a vehicle according to claim 12, further comprising:
an on-vehicle instrument configured to obtain and send to the on-vehicle terminal one or more of the setting information, the operating data, and the environmental data of the air conditioning system, to make the on-vehicle terminal send one or more of the setting information, the operating data, and the environmental data of the air conditioning system to the IoT platform and receive a warning or prompt message sent from the IoT platform.

14. The remote diagnosis system for an air conditioning system on a vehicle according to claim 12 or 13, further comprising at least one of a water temperature sensor, a wind speed sensor, a wind pressure sensor, a refrigerant temperature sensor, a pressure sensor, or a display terminal, wherein:
the water temperature sensor is configured to detect water temperature;
the wind speed sensor is configured to detect wind speed of a condenser;
the wind pressure sensor is configured to detect an inlet-to-outlet pressure difference of the condenser;
the refrigerant temperature sensor is configured to detect refrigerant temperature in a refrigerant pipe;
the pressure sensor is configured to detect refrigerant pressure in the refrigerant pipe; and
the display terminal is configured to display one or more of the settings information, the operational data, and the environmental data.

15. A computer-readable storage medium stored thereon computer program instructions that, when executed by a processor, implement the remote diagnosis method for an air conditioning system on a vehicle according to any one of claims 1 to 9.

16. A computer program, comprising:
instructions that, when executed by a processor, cause the processor to perform the remote diagnosis method for an air conditioning system on a vehicle according to any one of claims 1 to 9.
